# EUROPÄISCHE PATENTANMELDUNG

(11) **EP 1 338 999 A1**
(43) Veröffentlichungstag der Anmeldung: **27.08.2003**
(21) Anmeldenummer: 03000184.6
(22) Anmeldetag: 06.01.2003
(51) Int. Cl.: G06F 17/60

(54) **Verfahren zur maschinellen Auswertung von Daten aus bargeldlosen Zahlungsvorgängen zum Zweck der Verwertung in Kundenbindungs-, Rabatt- und Bonussystemen**

(30) Priorität: 07.01.2002 DE 10200314
(71) Anmelder: Bäck, Carsten, 27607 Langen (DE); Heinsohn, Rudolf, 21756 Osten (DE); Sagemühl, Jörg-Andreas, 27632 Midlum (DE)
(72) Erfinder: Bäck, Carsten, 27607 Langen (DE); Heinsohn, Rudolf, 21756 Osten (DE); Sagemühl, Jörg-Andreas, 27632 Midlum (DE)
(74) Vertreter: Eisenführ, Speiser & Partner

(57) **Zusammenfassung**

Die Erfindung betrifft ein Verfahren zur Bonifizierung insbesondere von Kartenzahlungen, aber auch von sonstigen Bezahlvorgängen bei Handels-, Handwerks- und Dienstleistungsunternehmen.

Aufgabe der Erfindung ist es, Händlern (insbesondere kleineren Einzelhändlern) zu ermöglichen, an einem technisch einfach konzipierten und kundenfreundlich durchzuführenden Rabatt- oder Bonusprogramm teilzunehmen. Es ist das Ziel, dass das ganze System vollautomatisch abläuft und die vorgeschriebenen Nachteile zusätzlicher Kartensysteme vermeidet.

Verfahren zur maschinellen Auswertung von Daten aus bargeldlosen Zahlungsvorgängen zum Zweck der Verwertung in Kundenbindungs-, Rabattoder Bonussystemen, wobei die an diesem System teilnehmende Händler und Kunden anhand ihrer Bankverbindung eindeutig identifiziert werden, wobei zum Zweck der Zuordnung von Punkt- oder Wertzahlen ein Abgleich mit den in einer ersten Datenbank abgelegten Daten zur Bankverbindung von Händlern und Kunden erfolgt, wobei pro Zahlungsvorgang durch eine Formelkalkulation aus dem Betrag und/oder durch eine Zuordnungstabelle, die in einer zweiten Datenbank abgelegt ist, eine Punkt- oder Wertzahl errechnet wird, wobei den am erfindungsgemäßen System teilnehmenden Händlern und Kunden diese Werte auf einem eigenen Punkte- oder Wertekonto in einer dritten Datenbank belastet bzw. gutgeschrieben werden.

## Beschreibung

Die Erfindung betrifft ein Verfahren zur Bonifizierung insbesondere von Kartenzahlungen, aber auch von sonstigen Bezahlvorgängen bei Handels-, Handwerks- und Dienstleistungsunternehmen.

Soweit in der vorliegenden Anmeldung von Begriff "Händler" die Rede ist, ist damit der Verkäufer von Waren oder Dienstleistungen gemeint, z.B. Einzelhändler, Handwerker oder Dienstleister, der am erfindungsgemäßen Kundenbindungs-, Rabatt- oder Bonussystem teilnimmt.

Soweit in der vorliegenden Anmeldung von einem Kunden die Rede ist, ist hiermit der Käufer von Waren oder Dienstleistungen gemeint.

Soweit in der vorliegenden Anmeldung von einem "Systembetreiber" die Rede ist, ist derjenige gemeint, der die technische Plattform für das erfindungsgemäße Kundenbindungs-, Rabatt- oder Bonussystem bereitstellt und dieses betreibt.

Soweit in der vorliegenden Anmeldung von Bankverbindungen, Kontonummern und Bankleitzahlen die Rede ist, sind auch die jeweiligen nationalen Entsprechungen sowie internationale Codes wie z. B. IBAN und BIC gemeint.

Die Bezahlung von Beträgen mittels verschiedenster Kartensysteme (z.B. Eurochequekarte, Kreditkarte) ist bereits seit langem als Standard eingeführt.

Bei derlei Bezahlung wird der zu zahlende Betrag in ein entsprechendes Kartenterminal eingegeben. Die Bankverbindung des Karteninhabers wird von der Karte in das Terminal eingelesen. Zur Autorisierung muss der Karteninhaber z.B. eine Geheimzahl eingeben oder eine Unterschrift leisten.

Zur Durchführung der Bezahltransaktion wird vom Kartenterminal zu einem zentralen Rechner eine Datenverbindung aufgebaut. Von dort werden die Daten in den Zahlungsverkehr eingeleitet. Dem Konto des Unternehmens wird der entsprechende Betrag gutgeschrieben, das Konto des Karteninhabers wird belastet. Insgesamt hat sich die auf Karten basierende Bezahlung im täglichen Verkehr bereits weitestgehend durchgesetzt.

Durch das Wegfallen des Rabattgesetzes (gilt für die Bundesrepublik Deutschland) gibt es nunmehr (unabhängig von der Bezahlweise) ein großes Interesse des Handels auch an Kundenbindungs-, Rabatt- und Bonusprogrammen.

Dies hat z. B. schon dazu geführt, dass große Handelsketten eigene Kundenkarten für Rabatt-, Erstattungs- oder Bonusprogramme eingeführt haben, so dass immer dann, wenn Kunden bei diesen Handelsketten eine solche Karte beim Einkauf vorlegen, ein entsprechender Bonus gutgeschrieben wird.

Der Nachteil solcher Bonus-, bzw. Rabattsysteme ist, dass der Kunde eine zusätzliche Kundenkarte benötigt, um in den Genuss des attraktiven Rabatt- oder des Bonusprogramms zu kommen.

Völlig untauglich ist ein solches System insbesondere für den (kleinen und mittleren) Einzelhandel, das Handwerk und den Dienstleistungsbereich. Bei dem so organisierten Handel bestehen Einzelhandels-, Handwerks- oder sonstige Dienstleistungsgeschäfte oftmals nebeneinander, z.B. innerhalb einer bestimmten Ortschaft oder einer bestimmten Region. Die einzelnen Geschäfte verfügen regelmäßig nur über ein Ladengeschäft, selten zwei, drei oder mehr. Der Aufbau eines geschlossenen Rabatt- oder Bonusprogrammsystems macht für solche Geschäfte keinerlei Sinn, da die Kundenfrequentierung dieser Geschäfte zu gering ist, als dass der Aufbau eines eigenen Bonus- oder Rabattprogramms lohnen würde.

Gleichwohl haben auch solche kleinere und mittlere Händler ein Interesse daran, ein entsprechendes Kundenbindungs-, Rabatt- oder Bonusprogramm für ihre Kunden aufzubauen.

Diesbezüglich wurden bereits Überlegungen angestellt, inwieweit branchenübergreifend Rabatt-/Bonussysteme verwendet werden können. Hierbei werden im Wesentlichen spezielle Karten, (z.B. die "Payback-Card") verwendet, bei deren Einsatz automatisch ein entsprechender Bonus oder eine Gutschrift erfolgt.

Derlei Anwendungen belasten den Handel jedoch durch hohe Kosten für die Technik (Hardware), weil dafür an jeden teilnehmenden Kunden eine Extrakarte (Kundenkarte) ausgegeben werden muss und jeder am Rabattprogramm teilnehmende Händler ein zusätzliches technisches System, nämlich ein spezielles Kartenterminal für die besondere "Kundenkarte" benötigt, um die entsprechenden Rabatte vergeben zu können. Des Weiteren ist bei Eingabe einer solchen Karte an der Kasse des Einzelhandels neben dem eigentlichen Bezahlvorgang immer auch ein separater Vorgang mittels Kundenkarte erforderlich, was den gesamten Zahlvorgang stört, in jedem Fall verlangsamt. Daher ist es nur verständlich, wenn Händler und Kunden derartige Kartensysteme nicht akzeptieren, auch deshalb, weil die damit verbundenen Kosten in keinem vernünftigen Verhältnis zum Nutzen stehen.

Wie bereits beschrieben, sind auf Karten basierende Bezahlungsverfahren (z.B. ELV, Electronic-Cash) weit verbreitet. Heute verfügt praktisch jeder Kunde über eine eigene Karte eines gängigen Systems, mittels der auch entsprechende Bezahlvorgänge vorgenommen werden können. Die hierzu verwendeten Terminals erzeugen beim Bezahlvorgang standardisierte Zahlungsdateien, die über einen Netzbetreiber (z.B. B+S, Anthros) zur Buchung an das kontoführende Kreditinstitut des Händlers geleitet werden. Von dort werden dann sowohl die Händlergutschrift als auch die Belastung des Kunden maschinell veranlasst. Die Zahlungsdateien enthalten insbesondere Informationen, wie die Bankverbindung des Händlers, die Bankverbindung des Kunden und den zu zahlenden Betrag.

Aufgabe der Erfindung ist es, Händlern (insbesondere kleineren Einzelhändlern) zu ermöglichen, an einem technisch einfach konzipierten und kundenfreundlich durchzuführenden Rabatt- oder Bonusprogramm teilzunehmen. Es ist das Ziel, dass das ganze System vollautomatisch abläuft und die vorgeschriebenen Nachteile zusätzlicher Kartensysteme vermeidet.

Die Aufgabe wird erfindungsgemäß mit einem Verfahren mit den Merkmalen nach Anspruch 1 gelöst, vorteilhafte Weiterbildung sind in den Unteransprüchen beschrieben.

Bei dem erfindungsgemäßen Verfahren wird nicht nur ein vollautomatisches System vorgeschlagen, welches ohne zusätzliche technisch aufwendige Komponenten auskommt, also für das der konkrete Einzelhändler keine zusätzliche Hardware oder Software Komponenten benötigt, sondern das insbesondere auch die Bonus- oder Rabattvergabe ohne Unterstützung einer weiteren Karte und ohne zusätzlichen Zeitaufwand beim Kassiervorgang beinhaltet.

Eine - untechnische - Voraussetzung des erfindungsgemäßen Verfahrens könnte in der Praxis sein, dass Händler, Handwerker oder Dienstleister eine Vereinbarung mit dem Systembetreiber abschließen, wobei unter anderem vereinbart wird, welche Punktebewertung für welche Umsätze vergeben werden sollen. So kann beispielsweise ein Anbieter (Händler I) bestimmte Umsätze mit höheren Bonuspunkten belegen, als es andere Anbieter (Händler II) bei dem gleichen Umsatzbetrag tun würden. Ebenso ist eine Bonus-/oder Rabattvergabe denkbar, die Vergünstigungen in Abhängigkeit von der Umsatzhöhe vorsieht.

Der Kunde, der dass erfindungsgemäße Verfahren benutzen und in den Rabattgenuss kommen will, muss sich entsprechend registrieren bzw. registrieren lassen, wozu sich anbietet, dass die erforderlichen Kundendaten (Name, Adresse, Kontonummer, Bankleitzahl, ggf. E-Mail) über das Internet in eine entsprechende Datenbank eingestellt werden.

Bezahlt nunmehr ein entsprechend so registrierter Kunde einen Betrag mittels seiner beispielsweise Eurochequekarte bei einem registrierten Händler, so wird je nach Umsatz und der damit vom Händler vorgegebenen Zuordnung in einer Datenbank dem entsprechenden Kunden eine bestimmte Punkte- oder Wertzahl gutgeschrieben (Bonusprämie).

Der Bezahlvorgang selbst wird durch die Bonifizierung nicht beeinflusst.

Um zu ermitteln, welche der bargeldlosen Bezahlvorgänge bonifiziert werden können, werden die Zahlungsdaten dem Systembetreiber zur Verfügung gestellt. Hierzu richtet der Händler dem Systembetreiber eine Vollmachtsabfrage der Daten bei seinem Kreditinstitut (z.B. per Online-Banking) oder beim Terminal-Netzbetreiber des Händlers ein. Auch eine direkte Einreichung der Daten ( z.B. per Diskette) durch den Händler ist möglich.

Der Systembetreiber nutzt zur Identifizierung von bonifizierungsfähigen Umsätzen die Bankverbindung aus den eingereichten Zahlungsdaten und vergleicht diese mit den hinterlegten Bankverbindungen der registrierten Kunden. Daten von nicht registrierten Kunden werden gelöscht, können also zu keiner Bonusgutschrift führen.

Die registrierten Kunden erhalten durch den Systembetreiber eine Gutschrift auf ein Bonuskonto, wobei sich die Höhe der Gutschrift nach den Vorgaben des Händlers richtet.

Der Systembetreiber belastet den Händler für die Vergabe der Bonusprämie mit dem entsprechenden Betrag. Darüber hinaus stellt der Systembetreiber dem Händler die Kosten für seine Dienstleistung auf der Grundlage einer Vertragsvereinbarung in Rechnung.

Wenn nunmehr ein Kunde in seinem Umfeld häufig mit der Karte bargeldlos bezahlt und möglichst viele Händler an das erfindungsgemäße System angebunden sind, kann ein so registrierter Kunde ein branchenübergreifendes Bonus- oder Rabattsystem in Anspruch nehmen.

Durch den Bezahlvorgang wird ein Vergleich der Kundendatei mit den Zahlungsverkehrsdaten der Händler ausgelöst und somit anhand der Bankverbindungen (Kontonummer, Bankleitzahl) die Kundenidentifizierung und die automatische Bonifizierung des Bezahlvorganges möglich. Es ist auch möglich, dass automatisch nach einem bargeldlosen Zahlungsakt ein E-Mail an den jeweiligen Kunden ausgelöst wird, wobei in dem E-Mail dann dem Kunden die Höhe seiner insgesamt bereits erreichten Bonusgutschriften mitgeteilt wird, die er neben anderen Informationen (Dank des Händlers für den Einkauf, Verweis auf Internet-Präsenz des Händlers etc.) erhält.

Somit wird bei jedem realen Kundenkontakt (Bezahlung an der Kasse) automatisch ein weiterer virtueller Kundenkontakt generiert.

### Besonderheiten im Handwerk

Speziell im Handwerk werden nach wie vor Waren und Leistungen oftmals nicht im Ladengeschäft direkt erbracht und bezahlt, sondern die Bezahlung erfolgt häufig erst gegen Rechnung. Durch Auswertung der Zahlungseingänge auf dem Konto des Händlers/Handwerkers ist ebenfalls eine Einbeziehung solcher Bezahlvorgänge in das erfindungsgemäße Verfahren möglich. Gegebenenfalls können standardisierte Online-Banking-Produkte zur Datenbeschaffung herangezogen werden.

### Besonderheiten für Kreditinstitute

Durch Auswertung von Buchungsdaten kann das systembetreibende oder jedes andere Kreditinstitut, das sich als Anbieter im System registrieren lässt, mit seinen Kunden getätigte Geschäfte bonifizieren (z.B. Wertpapierorders, Abschluss von Verträgen, Bestellung von Kreditkarten, neue Homebanker...)

Das System ist somit sehr vielseitig und flexibel auf die Bedürfnisse des eigenen Betriebes des jeweiligen Anbieters abstimmbar.

Grundsätzlich ist es möglich, die gesammelten Gutschriften gegen Geld oder Sachprämien einzutauschen. Idealerweise erhält jeder teilnehmende Händler die Möglichkeit, selbst Prämien in einen internetbasierten Prämien-Shop einzustellen, so dass sich der Kunde auch über Internetbedienung seine Prämie aussuchen kann. Neben der zusätzlichen Chance des Verkaufs bietet sich für den Händler damit eine weitere Möglichkeit an, sein Angebot darzustellen.

## Patentansprüche

1. Verfahren zur maschinellen Auswertung von Daten aus bargeldlosen Zahlungsvorgängen zum Zweck der Verwertung in Kundenbindungs-, Rabatt- oder Bonussystemen, wobei die an diesem System teilnehmende Händler und Kunden anhand ihrer Bankverbindung (ggf. sonstige nationale Entsprechungen und internationale Codes wie z.B. IBAN, BIC) eindeutig identifiziert werden, wobei zum Zweck der Zuordnung von Punkt- oder Wertzahlen ein Abgleich mit den in einer ersten Datenbank abgelegten Daten zur Bankverbindung (ggf. sonstige nationale Entsprechungen und internationalen Codes wie z. B. IBAN, BIC) von Händlern und Kunden erfolgt, wobei pro Zahlungsvorgang durch eine Formelkalkulation aus dem Betrag und/oder durch eine Zuordnungstabelle, die in einer zweiten Datenbank abgelegt ist, eine Punkt- oder Wertzahl errechnet wird, wobei den am erfindungsgemäßen System teilnehmenden Händlern und Kunden diese Werte auf einem eigenen Punkte- oder Wertekonto in einer dritten Datenbank belastet bzw. gutgeschrieben werden.

2. Verfahren nach Anspruch 1,
**dadurch gekennzeichnet, dass** aufgrund eines Bezahlvorganges eine entsprechende Aufwertung der Punkte- oder Wertzahl in einer dritten Datenbank erfolgt.

3. Verfahren nach einem der vorherigen Ansprüche,
**dadurch gekennzeichnet, dass** nach einem Bezahlvorgang automatisch eine E-Mail an eine vom Bezahler oder Zahlungsempfänger vorbestimmte Adresse gesendet wird.

4. Verfahren nach einem der vorherigen Ansprüche,
**dadurch gekennzeichnet, dass** bei Erreichen einer vorbestimmten Punktoder Wertezahl in der dritten Datenbank automatisiert eine Nachricht an den Inhaber des Kontos, welcher die Punkte- oder Wertezahl angesammelt hat, abgesetzt wird, wobei diese Absetzung bevorzugt mittels E-Mail oder automatischer Generierung eines entsprechenden Schreibens an die Adresse des Kontoinhabers erfolgt.
